# FASCICULE DE BREVET EUROPEEN

(11) **EP 4 408 648 B1**
(45) Date de publication et mention de la délivrance du brevet: **04.11.2026**
(21) Numéro de dépôt: 22792840.5
(22) Date de dépôt: 21.09.2022
(51) Int. Cl.: B29C 65/18, B29C 65/48, B29D 24/00, B29C 70/84, B32B 3/26, B32B 3/28, B32B 5/02, F02B 77/13, G10K 11/172, B29L 16/00, B29L 24/00, B29C 70/00, B29C 70/02, B29C 70/68, B29C 70/74, B29C 70/76, B29C 70/78, F02F 7/00

(54) **PROCÉDÉ DE FABRICATION D'UN PANNEAU ACOUSTIQUE PAR SOUDAGE ET CARTER DE MOTEUR AÉRONAUTIQUE**
VERFAHREN ZUR HERSTELLUNG EINER AKUSTIKPLATTE DURCH SCHWEISSEN UND TRIEBWERKSGEHÄUSE FÜR DIE LUFTRFAHRT
METHOD FOR MANUFACTURING AN ACOUSTIC PANEL BY WELDING AND AERONAUTICAL ENGINE CARTER

(30) Priorité: 01.10.2021 FR 2110405
(43) Date de publication de la demande: 07.08.2024
(73) Titulaire: SAFRAN, 75015 Paris (FR)
(72) Inventeur: LANFANT, Nicolas, Pierre, 77550 MOISSY-CRAMAYEL (FR); ALGLAVE, Hugues, Laurent, 77550 MOISSY-CRAMAYEL (FR); DUNLEAVY, Patrick, 77550 MOISSY-CRAMAYEL (FR)
(74) Mandataire: Cabinet Beau de Loménie
(86) Numéro de dépôt international: PCT/FR2022/051778
(87) Numéro de publication internationale: WO 2023/052707

(56) Documents cités:
- US-A1- 2004 081 797
- US-A1- 2006 102 275
- US-A1- 2011 100 747

## Description

### Domaine Technique

La présente invention se rapporte au domaine général des structures d'atténuation acoustiques. Elle concerne plus particulièrement les structures d'atténuation acoustiques utilisées pour réduire les bruits produits dans les moteurs d'avion comme dans les turbines à gaz ou échappement de ceux-ci.

### Technique antérieure

Les structures d'atténuation acoustique sont typiquement constituées d'une plaque ou peau de surface acoustique perméable aux ondes acoustiques que l'on souhaite atténuer et d'une plaque ou peau pleine réfléchissante dite « plaque de fermeture », un corps cellulaire étant disposé entre ces deux parois. Le corps cellulaire est généralement constitué par un ensemble de cloisons, par exemple en forme de nid d'abeille, et par un panneau acoustique comprenant des éléments acoustiques creux complexes, par exemple des cônes. De façon bien connue, de telles structures forment des résonateurs de type Helmholtz qui permettent d'atténuer dans une certaine gamme de fréquences les ondes acoustiques. Des structures d'atténuation acoustique de ce type sont notamment décrites dans les documents US 5 912 442 et GB 2 314 526.

Pour réaliser des structures d'atténuation acoustique présentant des dimensions importantes, il est nécessaire de fabriquer un panneau acoustique de grande taille.

Les panneaux acoustiques sont classiquement réalisés par injection et/ou estampage. Toutefois, la taille des structures réalisables est limitée par les moyens de fabrication, par exemple par les dimensions de l'outillage d'injection.

Ainsi, pour réaliser des structures d'atténuation acoustique de grande taille, il peut être nécessaire d'assembler plusieurs sous-panneaux acoustiques de taille plus réduite, également appelés composants acoustiques.

L'assemblage des composants acoustiques peut être réalisé par le biais de systèmes de fixation, comprenant par exemple des alésages. Cependant, de tels systèmes de fixation réduisent la performance acoustique et augmentent l'encombrement. En effet, la surface fonctionnelle des composants acoustiques destinée à l'atténuation acoustique est réduite pour permettre le placement de ces systèmes de fixation.

Les composants acoustiques peuvent également être assemblés par soudage, en chauffant de façon importante la jonction entre les composants acoustiques. Toutefois, la réalisation du soudage entraîne également par diffusion thermique le chauffage de parties des composants acoustiques plus éloignées de la jonction, ce qui entraîne une déformation des composants et donc une modification non contrôlée de leur géométrie.

Il est donc nécessaire d'utiliser des outillages de maintien de grande dimension pour conserver la géométrie des composants acoustiques malgré les températures élevées. Ainsi, la taille des structures acoustiques réalisables est limitée par les dimensions de l'outillage de maintien.

Le document US 2006/102275 A1 divulgue un procédé de fabrication d'une cartouche de filtration. Les documents US 2011/100747 A1 et US 2004/081797 A1 divulguent un panneau acoustique.

### Exposé de l'invention

La présente invention a donc pour but principal de réaliser des structures acoustiques de grande dimension en s'affranchissant des inconvénients précités.

Conformément à l'invention, ce but est atteint grâce à un procédé de fabrication d'un panneau acoustique comprenant la fabrication d'au moins un premier composant acoustique et un deuxième composant acoustique en matériau thermoplastique comprenant chacun une pluralité d'éléments acoustiques creux, le premier composant comprenant un premier bord de jonction et le deuxième composant comprenant un deuxième bord de jonction, le premier composant et le deuxième composant étant soudés l'un à l'autre par les premier et deuxième bords de jonction pour former au moins une partie du panneau acoustique,
le procédé étant caractérisé en ce que, lors de l'opération de soudage, un outillage recouvre une partie des premier et deuxième composants comprenant les premier et deuxième bords de jonction de sorte à épouser la géométrie des éléments acoustiques creux recouverts,
et en ce qu'un gradient thermique est appliqué sur les parties du premier composant et du deuxième composant recouvertes par l'outillage de sorte à appliquer une température supérieure à la température de transition vitreuse ou de fusion du matériau thermoplastique sur les premier et deuxième bords de jonction et de sorte à appliquer une température inférieure ou égale à la température de stabilisation géométrique du matériau thermoplastique sur les éléments acoustiques creux recouverts par l'outillage les plus éloignés des premier et deuxième bords de jonction.

Ainsi, pour réaliser un panneau acoustique de grande taille, il est particulièrement intéressant d'assembler les composants acoustiques en les soudant les uns aux autres, pour conserver une grande surface fonctionnelle d'un point de vue acoustique sans augmenter l'encombrement. Le coût de montage est également réduit, puisque l'on peut manipuler un grand composant acoustique plutôt que plusieurs petits composants acoustiques. Enfin, on réduit la masse globale du panneau acoustique en limitant fortement le nombre et la taille des éléments de fixation nécessaires, voire en éliminant complètement les éléments de fixation.

La soudure des bords de jonction des composants nécessite une température élevée, qui est susceptible de déformer ou de modifier la géométrie des composants acoustiques par diffusion thermique, y compris dans les parties éloignées de la soudure. Afin qu'il ne soit pas nécessaire d'utiliser des outillages de chauffage ou de maintien de grande dimensions pour conserver la géométrie des composants acoustiques malgré les températures élevées, l'invention propose l'utilisation d'un gradient thermique.

Ainsi, seule la portion des composants acoustiques située proche de la soudure est soumise à une température élevée, tandis que la température des composants acoustiques en sortie d'outillage est suffisamment faible pour éviter toute déformation ou modification de leur géométrie. Les dimensions de l'outillage de soudage utilisé sont donc nettement inférieures à celles du panneau acoustique à réaliser, ce qui permet par conséquent de fabriquer un panneau acoustique de grande taille. L'outillage de soudage utilisé est par ailleurs plus facile à manipuler et peut être réutilisé très rapidement. Ainsi, il permet de réaliser successivement plusieurs soudures entre différents composants acoustiques.

Selon une caractéristique particulière de l'invention, une partie des éléments acoustiques creux du premier composant et du deuxième composant est située en dehors de l'outillage.

Selon une autre caractéristique particulière de l'invention, le deuxième bord de jonction recouvre en partie le premier bord de jonction.

Selon une autre caractéristique particulière de l'invention, une surépaisseur de matière est présente le long du premier et du deuxième bord de jonction.

Selon une autre caractéristique particulière de l'invention, le gradient thermique est réalisé par air pulsé, en réalisant un pilotage par zone de la température de l'outillage.

Selon une autre caractéristique particulière de l'invention, le matériau thermoplastique est un polyétherimide.

Selon une autre caractéristique particulière de l'invention, la température appliquée sur les premier et deuxième bords de jonction est supérieure à 420°C et la température appliquée sur les éléments acoustiques creux recouverts par l'outillage les plus éloignés des premier et deuxième bords de jonction est inférieure à 215°C. De préférence, la température appliquée sur les éléments acoustiques creux recouverts par l'outillage les plus éloignés des premier et deuxième bords de jonction est inférieure à 200°C.

Les températures décrites ici sont particulièrement pertinentes dans le cas de composants acoustiques réalisés en polyétherimide (PEI).

L'invention concerne en outre un procédé de fabrication d'une structure d'atténuation acoustique comprenant les étapes suivantes :
- la fabrication d'un panneau acoustique selon le procédé de l'invention,
- la réalisation d'un corps cellulaire comprenant le panneau acoustique et une pluralité de cloisons formant des cavités acoustiques, chaque élément acoustique creux du panneau acoustique étant logé dans une cavité acoustique de manière à former une cellule acoustique,
- l'assemblage d'une première face du corps cellulaire avec une face d'assemblage d'une peau acoustique.

Selon une caractéristique particulière de l'invention, le procédé comprend en outre l'assemblage d'une deuxième face du corps cellulaire opposée à la première face recouverte par la peau acoustique avec une face d'assemblage d'une peau de fermeture.

L'invention concerne en outre un carter de moteur aéronautique, ou carter d'ensemble propulsif aéronautique, comprenant au moins une structure d'atténuation acoustique fabriquée selon le procédé de l'invention.

### Brève description des dessins

[Fig. 1] La figure 1 est une représentation en perspective de deux composants acoustiques à souder pour obtenir un panneau acoustique.
[Fig. 2] La figure 2 est une représentation en perspective de la mise en position des deux composants acoustiques de la figure 1.
[Fig. 3] La figure 3 est une représentation en perspective de la mise en position des deux composants acoustiques de la figure 1, les bords de jonction comprenant des surépaisseurs de matière.
[Fig. 4] La figure 4 est une représentation en perspective de la mise en position des deux composants acoustiques de la figure 1, les bords de jonction se chevauchant à la jonction de deux composants.
[Fig. 5] La figure 5 est une représentation en coupe d'un outillage de soudage dans lequel sont mis en position les composants acoustiques à souder.
[Fig. 6] La figure 6 est une représentation de la température des composants acoustiques à l'intérieur de l'outillage de soudage de la figure 5 en fonction de leur distance à la jonction.
[Fig. 7] La figure 7 est une représentation en perspective éclatée d'une structure acoustique comprenant le panneau acoustique fabriqué selon le procédé de l'invention.
[Fig. 8] La figure 8 est une représentation en coupe de la structure acoustique représentée sur la figure 7.

### Description des modes de réalisation

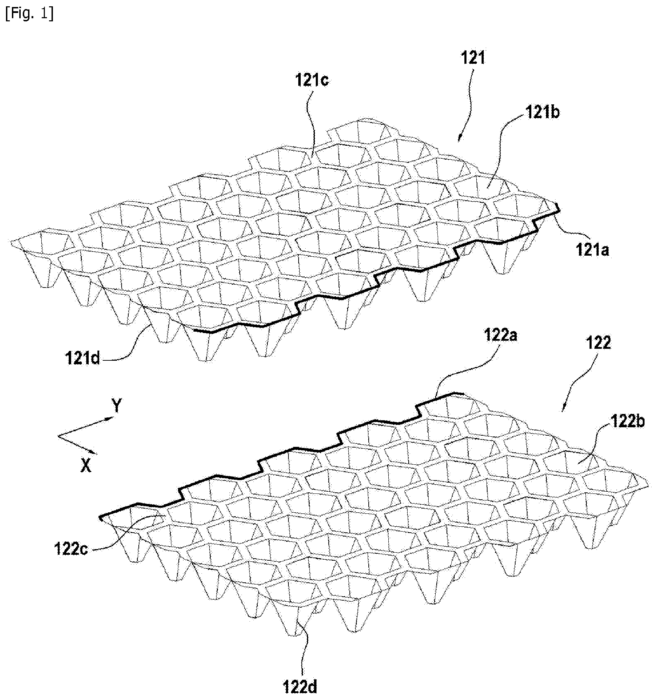

Les figures 1 à 6 illustrent un procédé de fabrication selon l'invention d'un panneau acoustique comportant des éléments acoustiques creux complexes. Ce panneau acoustique est destiné à être assemblé avec une peau acoustique, une pluralité de cloisons et éventuellement une peau de fermeture pour former une structure d'atténuation acoustique complète.

La figure 1 illustre un premier composant acoustique 121 et un deuxième composant acoustique 122.

Les composants acoustiques 121 et 122 s'étendent en largeur selon une direction X et en longueur selon une direction Y.

Le premier composant acoustique 121 comprend une face supérieure 121c et une face inférieure 121d opposée à la première face 121c. Les faces 121c et 121d s'étendent selon les directions X et Y. La face supérieure 121c du premier composant acoustique 121 comprend une pluralité d'éléments acoustiques complexes creux 121b.

Le deuxième composant acoustique 122 comprend une face supérieure 122c et une face inférieure 122d opposée à la face supérieure 122c. Les faces 122c et 122d s'étendent selon les directions X et Y. La face supérieure 122c du deuxième composant acoustique 122 comprend une pluralité d'éléments acoustiques complexes creux 122b.

Dans l'exemple illustré sur les figures 1 à 8, les composants acoustiques 121 et 122 sont droits. On ne sort bien entendu pas du cadre de l'invention si les composants acoustiques sont courbés ou présentent des angles. Dans ce cas, l'outillage de soudage décrit ci-après devra être adapté aux courbures ou aux angles desdits composants acoustiques.

Le premier composant acoustique 121 et le deuxième composant acoustique 122 sont destinés à être soudés l'un à l'autre pour former un panneau acoustique. Ainsi, la face supérieure 121c du premier composant acoustique 121 comprend un premier bord de jonction 121a et la face supérieure 122c du deuxième composant acoustique 122 comprend un deuxième bord de jonction 122a. Le premier bord de jonction 121a du premier composant acoustique 121 est donc destiné à être soudé au deuxième bord de jonction 122a du deuxième composant acoustique 122.

Les composants acoustiques 121 et 122 sont formés en une seule pièce. Ils peuvent être réalisés de manière bien connue en matériau thermoplastique par injection ou par estampage. Le matériau thermoplastique peut être chargé avec des fibres courtes ou avec des fibres continues. Le matériau thermoplastique peut ne pas être chargé.

Les composants acoustiques 121 et 122 peuvent également être réalisés de manière bien connue par injection-compression d'un matériau thermoplastique chargé ou non. L'injection-compression consiste à injecter la matière dans un moule entrouvert. Ainsi, même si la matière se fige, les canaux s'obstruent moins. Lorsque la matière est répartie dans l'ensemble du moule, celui-ci est complètement fermé par un effort de fermeture pour revenir à la bonne cote. Cela permet d'obtenir des épaisseurs de parois pour les composants acoustiques plus fines qu'avec un procédé d'injection classique.

Les composants acoustiques 121 et 122 peuvent également être réalisés de manière bien connue par injection avec pilotage de la température de l'outillage d'un matériau thermoplastique chargé ou non. L'injection avec pilotage de la température de l'outillage consiste à contrôler la température de l'outillage ou du moule au moyen d'un système d'asservissement de la température de l'outillage, par exemple avec un fluide caloporteur ou avec de l'air.

Les matériaux thermoplastiques qui peuvent être utilisés pour fabriquer les composants acoustiques 121 et 122 sont notamment les polyaryléthercétones (PAEK) tels que le polyétheréthercétone (PEEK) et le polyéthercétonecétone (PEKK), les polyétherimides (PEI), le polysulfure de phénylène (PPS), le polyéthersulfone (PESU) et le polysulfone (PSU).

Dans l'exemple présenté sur les figures 1 à 8, les éléments acoustiques complexes creux présentent une forme pyramidale. On ne sort cependant pas du cadre de l'invention si les éléments acoustiques complexes creux présentent par exemple une forme conique, en spirale ou en entonnoir. De préférence, les éléments acoustiques complexes creux ont une forme qui se rétrécit progressivement depuis la face supérieure du composant vers la face inférieure du composant acoustique.

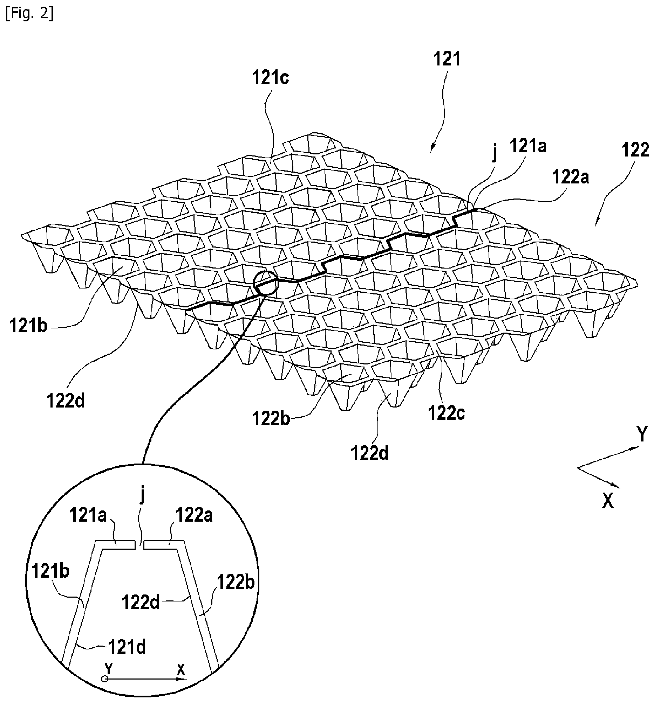

Les composants acoustiques 121 et 122 sont ensuite mis en position de manière à permettre le soudage, comme illustré sur la figure 2. Ainsi le premier bord de jonction 121a du premier composant acoustique 121 est placé à proximité, voire au contact, du deuxième bord de jonction 122a du deuxième composant acoustique 122, pour définir une jonction j entre les composants acoustiques 121 et 122. La mise en position des composants acoustiques 121 et 122 l'un par rapport à l'autre permet d'obtenir la forme du panneau acoustique à réaliser avant soudure.

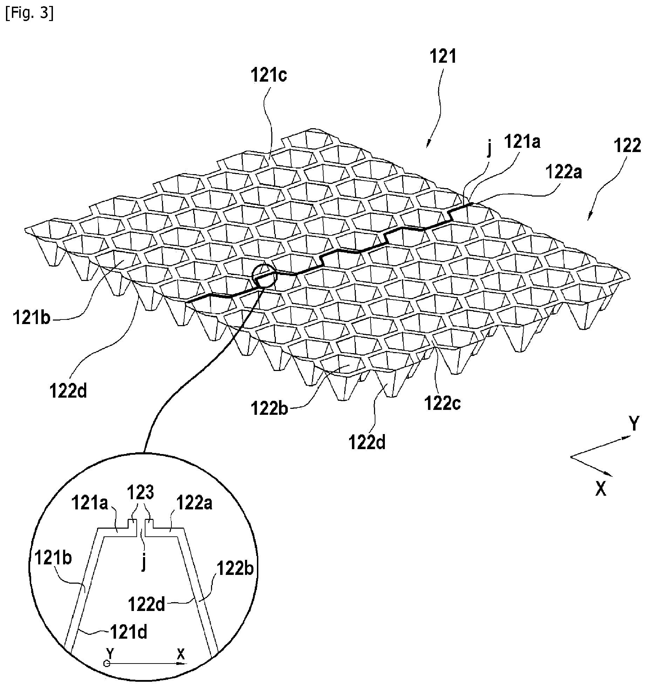

Selon une variante illustrée sur la figure 3, des surépaisseurs 123 peuvent être présentes sur la face supérieure 121c du premier composant acoustique 121, le long du premier bord de jonction 121a. De même, des surépaisseurs 123 peuvent être présentes sur la face supérieure 122c du deuxième composant acoustique 122, le long du deuxième bord de jonction 122a. Lesdites surépaisseurs de matière 123 s'élèvent perpendiculairement aux directions X et Y, le long de la jonction j. Ces surépaisseurs de matière 123 sont classiquement réalisées en matériau thermoplastique, de préférence identique à celui utilisé pour réaliser le composant acoustique 121 ou 122. De préférence, ces surépaisseurs 123 sont réalisées simultanément avec le reste du composant acoustique, pour former le tout en une seule pièce. Ces surépaisseurs 123 facilitent le soudage à la jonction j des composants acoustiques 121 et 122, en apportant un surplus de matière thermoplastique permettant de combler plus aisément le jeu entre les deux composants lors du soudage. On peut également appliquer une pression verticale sur l'ensemble de l'outillage ou uniquement sur la jonction j de sorte à forcer les surépaisseurs 123 dans le jeu présent entre les deux composants.

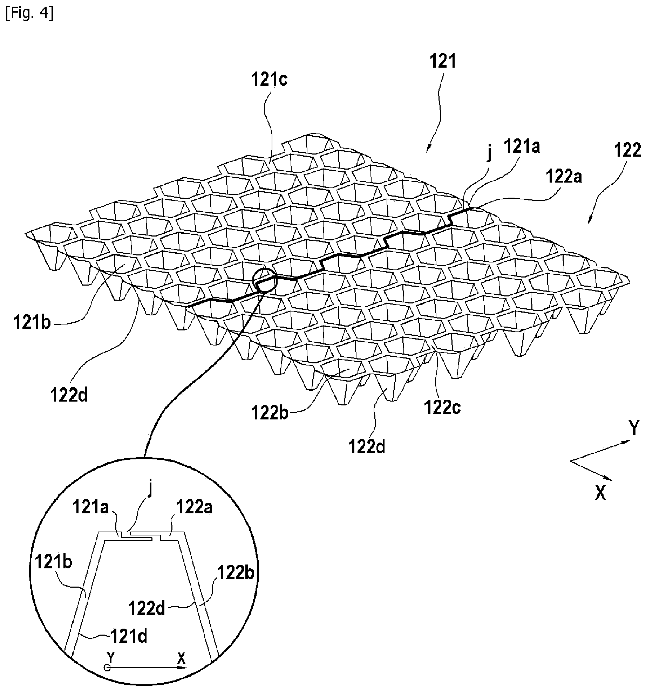

Selon une variante illustrée sur la figure 4, un chevauchement du premier composant acoustique 121 avec le deuxième composant acoustique 122 peut être réalisé à la jonction j entre les deux composants 121 et 122. Ce chevauchement peut notamment être réalisé en réduisant sur une partie l'épaisseur du premier bord de jonction 121a et/ou en réduisant sur une partie l'épaisseur du deuxième bord de jonction 122a.

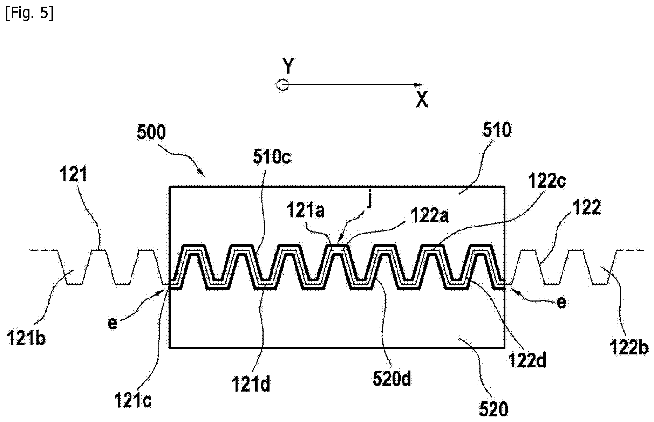

La figure 5 illustre un outillage de soudage 500 comprenant un moule 510 et un contre-moule 520. Le moule 510 comprend des dents 510c et le contre-moule 520 comprend des cavités de moulage 520d destinées à coopérer avec les dents 510c pour épouser la forme des composants acoustiques 121 et 122 à proximité de leur jonction j.

Le moule et/ou le contre-moule de l'outillage de soudage peuvent se présenter en plusieurs parties distinctes, afin de faciliter l'application de pressions ou de températures différentes en des zones particulières des composants acoustiques, par exemple en distinguant la zone de jonction, autrement dit la zone de soudage, des autres zones.

Comme illustré sur la figure 5, les composants acoustiques 121 et 122 sont mis en position dans l'outillage de soudage 500 de sorte que le premier bord de jonction 121a et le deuxième bord de jonction 122a sont intégralement présents à l'intérieur de l'outillage 500, tandis que les parties des composants acoustiques 121 et 122 les plus éloignées des bords de jonction 121a et 121b sont situées de préférence en dehors de l'outillage 500.

En particulier, la face supérieure 121c du premier composant acoustique 121 et la face supérieure 122c du deuxième composant acoustique 122 sont placées au contact du moule 510, de sorte que les dents 510c du moule 510 épousent la forme des éléments acoustiques complexes creux 121b et 122b des composants acoustiques 121 et 122. En outre, la face inférieure 121d du premier composant acoustique 121 et la face inférieure 122d du deuxième composant acoustique 122 sont placées au contact du contre-moule 520, de sorte que les cavités de moulage 520d du contre-moule 520 épousent la forme des éléments acoustiques complexes creux 121b et 122b des composants acoustiques 121 et 122.

L'outillage de soudage 500 dispose d'un système de régulation de température permettant d'appliquer un gradient de température sur les composants acoustiques 121 et 121 disposés en partie dans l'outillage de soudage 500.

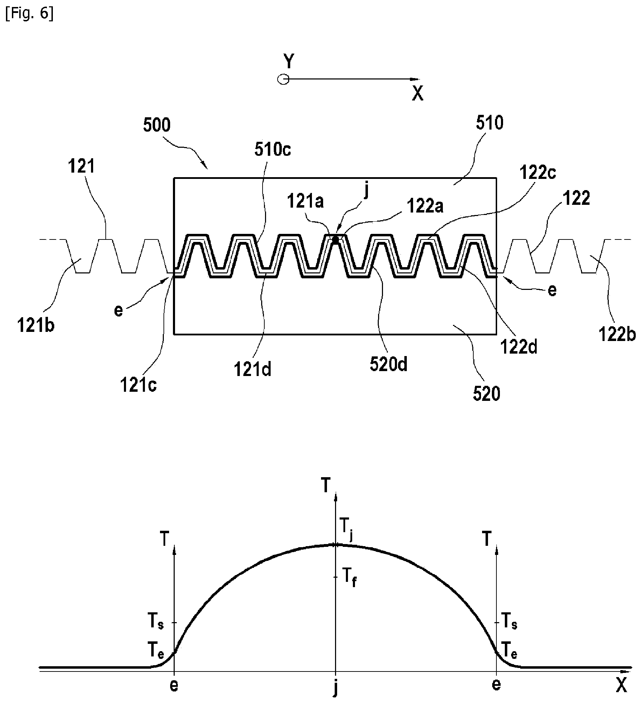

Lorsque les composants acoustiques 121 et 122 sont mis en place dans l'outillage de soudage 500, on applique un gradient thermique dans le moule 510 et/ou dans le contre-moule 520. Comme illustré sur la figure 6, le gradient thermique ainsi mis en œuvre permet d'appliquer une température Tⱼ à la jonction des composants acoustiques 121 et 122 qui est supérieure à la température de fusion T_{f} du matériau thermoplastique. En effet, dans le cas d'un thermoplastique non-amorphe, on préférera appliquer une température Tⱼ à la jonction des composants acoustiques 121 et 122 supérieure à la température de fusion T_{f} du matériau. Toutefois, on ne sort pas du cadre de l'invention si la température appliquée à la jonction des composants acoustiques est juste supérieure à la température de transition vitreuse du matériau. Dans le cas d'un thermoplastique amorphe, on peut appliquer une température à la jonction des composants acoustiques supérieure à la température de transition vitreuse du matériau.

L'application d'une température Tⱼ supérieure à la température de fusion Tᵣ à la jonction des composants acoustiques 121 et 122 permet de souder le premier bord de jonction 121a au deuxième bord de jonction 122a. Le gradient thermique permet en outre d'appliquer une température progressivement décroissante jusqu'aux parties e des composants acoustiques 121 et 122 les plus éloignées de la jonction j. Aux extrémités de l'outillage de soudage 500, le gradient thermique applique une température Tₑ inférieure à la température de stabilisation géométrique du matériau thermoplastique Tₛ dans les parties e des composants acoustiques 121 et 122. Ainsi, la température qui se diffusera dans les parties des composants acoustiques 121 et 122 situées à l'extérieur du moule sera inférieure à la température Tₑ présente aux extrémités de l'outillage 500, et ainsi inférieure à la température de stabilisation géométrique Tₛ.

Le profil du gradient thermique présenté sur la figure 6 n'est donné qu'à titre d'exemple et n'est pas limitatif. En effet, d'autres profils sont également possibles, comme par exemple une courbe de Gauss.

Par exemple, dans le cas de composants acoustiques réalisés en polyétherimide (PEI), la température Tⱼ appliquée au niveau de la jonction j des deux composants acoustiques sera préférentiellement supérieure à 420°C. La température Tₑ appliquée sur les parties e recouvertes par le moule les plus éloignées de la jonction j sera préférentiellement inférieure à 215°C, et idéalement inférieure à 180°C, afin de conserver un matériau stabilisé.

Ainsi, il n'y aura donc pas de déformation des parties des composants acoustiques 121 et 122 situées à l'extérieur de l'outillage de soudage 500. Pour les parties des composants acoustiques 121 et 122 situées à l'intérieur de l'outillage de soudage 500 et soumises à des températures supérieures à la température de stabilisation géométrique Tₛ, les dents 510 du moule 510 et les cavités de moulage 520c du contre-moule 520 permettent de conserver la géométrie des composants acoustiques 121 et 122 pendant le soudage et durant le refroidissement.

Le gradient thermique peut être réalisé dans l'outillage de soudage 500 par fluide caloporteur. Une telle technologie est par exemple décrite dans le document US 2012267828 A1. Le gradient thermique peut également être réalisé de manière bien connue par induction. Enfin, selon un mode de réalisation préférentiel de l'invention, le gradient thermique peut être réalisé par air pulsé, en utilisant les technologies « PtFS » (Production to Functional Specification) de la société *Surface Generation.* Cette technologie permet d'appliquer des rampes de montée ou de descente en température très importantes et localisées, et typiquement de 30°C à 50°C par minute. En outre, la température en surface peut être contrôlée au degré Celsius près.

Un système ou un outillage de supportage peut être utilisé pour soutenir les parties des composants acoustiques situés à l'extérieur du moule lors de la mise en position dans l'outillage de soudage ou durant l'opération de soudage (non représenté).

Une pression peut être appliquée sur la jonction entre les deux composants acoustiques durant le soudage. En effet, des porosités peuvent se créer dans le matériau thermoplastique lorsqu'il est amené à très haute température. Ainsi, l'application d'une pression sur les composants acoustiques lors du soudage permet de réduire ces porosités. En outre, l'application d'une telle pression peut favoriser l'interpénétration des chaînes thermoplastiques au niveau de la jonction entre les deux composants acoustiques. Enfin, comme décrit précédemment, l'application d'une pression dans le cas de surépaisseurs à la jonction entre les deux composants acoustiques permet de déplacer la matière des surépaisseurs dans le jeu à combler entre les deux composants acoustiques.

Dans l'exemple illustré sur les figures 5 et 6, l'outillage de soudage 500 recouvre trois rangées d'éléments acoustiques complexes creux 121b du premier composant acoustique 121 à partir de la jonction j et trois rangées d'éléments acoustiques complexes creux 122b du deuxième composant acoustique 122 à partir de la jonction j. On ne sort bien entendu par du cadre de l'invention si l'outillage de soudage recouvre plus de trois rangées d'éléments acoustiques d'un composant acoustique à partir de la jonction. De préférence, l'outillage de soudage recouvre au moins 6 rangées d'éléments acoustiques creux du premier composant à partir de la jonction et au moins 6 rangées d'éléments acoustiques creux du deuxième composant à partir de la jonction. De préférence, l'outillage de soudage recouvre au plus 8 rangées d'éléments acoustiques creux du premier composant à partir de la jonction et au plus 8 rangées d'éléments acoustiques creux du deuxième composant à partir de la jonction.

Selon un mode préférentiel de réalisation de l'invention, pour faciliter l'application du gradient de température, l'outillage de soudage recouvre un même nombre de rangées d'éléments acoustiques de chaque côté de la jonction j, c'est-à-dire le même nombre de rangées d'éléments acoustiques pour chaque composant acoustique. En effet, cette configuration permet d'appliquer un gradient thermique de manière symétrique de part et d'autre de la jonction j. On ne sort bien entendu pas du cadre de l'invention si l'outillage recouvre un nombre différent de rangées d'éléments acoustiques pour chaque composant acoustique.

Suite à l'opération de soudage décrite ci-dessus, on obtient un panneau acoustique 120 formé par le soudage de deux composants acoustiques 121 et 122, comprenant un ensemble d'éléments acoustiques creux complexes 121b et 122b. En fabriquant un panneau acoustique par soudage de deux composants acoustiques ou plus, il est possible d'obtenir un panneau acoustique de très grande taille. Selon un mode de réalisation particulier de l'invention, le panneau acoustique ainsi obtenu peut comprendre un côté dont la longueur est supérieure ou égale à 1000 mm.

Dans l'exemple décrit sur les figures 1 à 6, le panneau acoustique 120 est fabriqué en soudant deux composants acoustiques 121 et 122. On ne sort bien entendu pas du cadre de l'invention si le panneau acoustique est réalisé en soudant plus de deux composants acoustiques.

Dans l'exemple présenté sur les figures 1 à 6, le premier composant acoustique est identique au deuxième composant acoustique. On ne sort bien entendu pas du cadre de l'invention si un ou plusieurs composants acoustiques présentent des dimensions ou une géométrie différentes des autres composants.

Dans l'exemple décrit sur les figures 1 à 6, le panneau acoustique 120 fabriqué a une forme plane. On ne sort bien entendu pas du cadre de l'invention si le panneau acoustique fabriqué est courbe, auquel cas les composants acoustiques, l'outillage de soudage et les éventuels outillages de supportage seront adaptés.

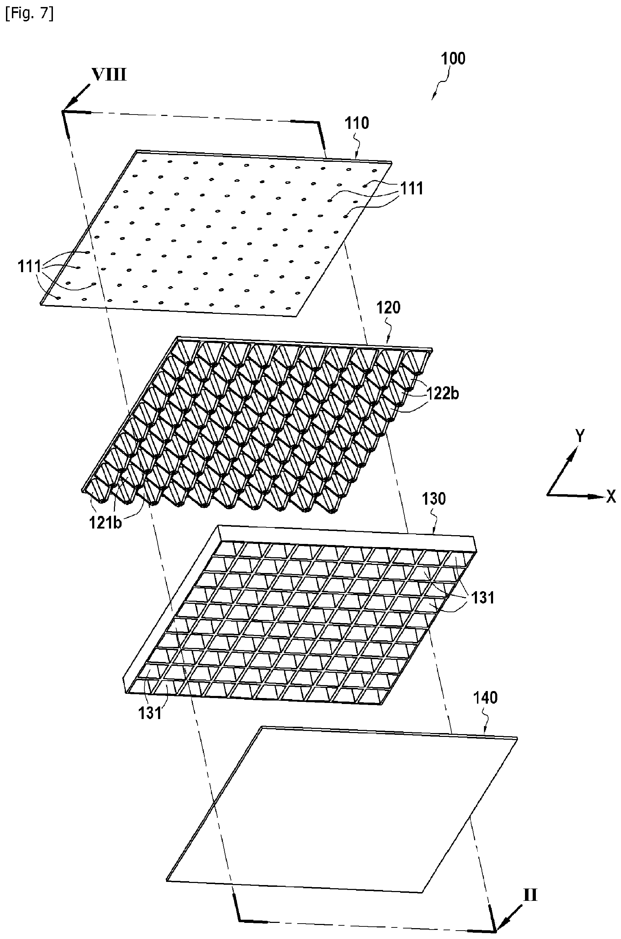

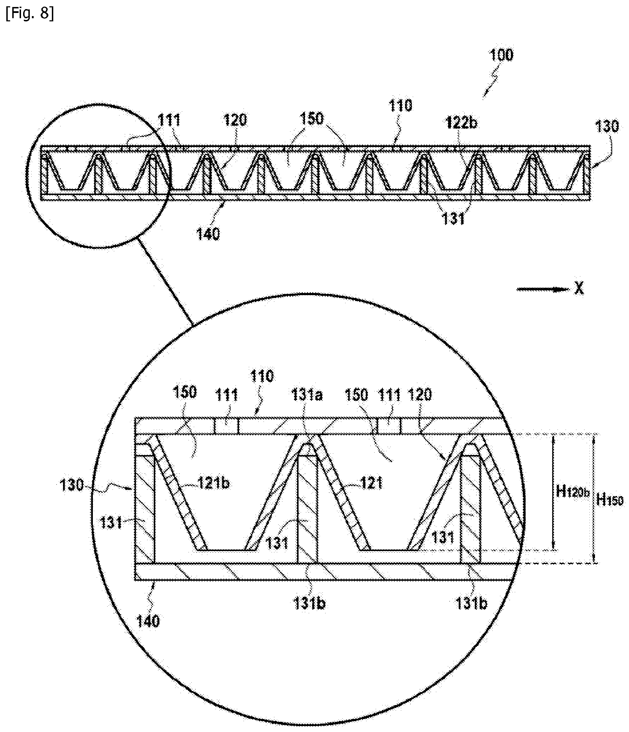

On décrit maintenant en relation avec les figures 7 et 8 un procédé de fabrication d'une structure d'atténuation acoustique conformément à un mode de réalisation de l'invention. La structure d'atténuation acoustique 100 comprend ici une peau ou plaque acoustique 110, un panneau acoustique 120 fabriqué comme décrit précédemment, une pluralité de cloisons 131 et une peau ou plaque de fermeture 140.

La peau de fermeture 140 correspond à une surface pleine destinée à réfléchir les ondes sonores entrant dans la structure d'atténuation acoustique. La peau de fermeture peut être un élément constitutif de la structure d'atténuation acoustique comme dans l'exemple décrit ici ou correspondre à une structure d'un objet, par exemple une paroi de moteur d'avion. Dans ce dernier cas, la structure d'atténuation acoustique de l'invention ne comporte pas de peau de fermeture et est directement montée sur la structure de l'objet.

La peau acoustique 110 a pour fonction de laisser passer les ondes sonores à atténuer à l'intérieur de la structure d'atténuation acoustique 100. A cet effet et dans l'exemple décrit ici, la peau acoustique 110 comprend une pluralité de perforations 111.

Le panneau acoustique 120 est formé par soudage d'au moins deux composants acoustiques 121 et 122 comme décrit précédemment et s'étend en longueur selon une direction X et en largeur selon une direction Y.

Dans l'exemple de réalisation décrit ici, la pluralité de cloisons 131 est réalisée en une seule pièce, à savoir un réseau de nervures 130 qui une fois assemblé avec le panneau acoustique 120 forme les cloisons autour des éléments acoustiques creux complexes 121b et 122b.

Toujours dans l'exemple décrit ici, la structure d'atténuation acoustique 100 est réalisée en assemblant le panneau acoustique 120 avec la pluralité de cloisons 131, le bord supérieur 131a des cloisons 131 étant fixés, par exemple par collage ou soudage, sur les bases des éléments acoustiques creux complexes 121b et 122b. L'assemblage entre ces deux éléments est grandement facilité par l'auto-positionnement des éléments acoustiques complexes creux avec les cloisons.

La peau de fermeture 140 est fixée, par exemple par collage ou soudage, sur le bord inférieur 131b des cloisons 131 tandis que la peau acoustique 110 est fixée, par collage ou soudage, sur la portion supérieure des bases des éléments acoustiques creux complexes 121b et 122b correspondant à la surface exposée des bords. Ainsi, la peau acoustique et la peau de fermeture sont chacune fixées sur un support parfaitement plan, ce qui permet d'assurer une très bonne étanchéité entre les peaux et l'assemblage du panneau acoustique avec la pluralité de cloisons.

Une fois assemblée, la structure d'atténuation 100 comprend une pluralité de cellules acoustiques 150 chacune formées par un élément acoustique creux complexe 121b ou 122b et les cloisons 131 qui l'entourent. La hauteur H120b des éléments acoustiques creux complexes 121b et 122b est inférieure à la hauteur H150 des cellules acoustiques 150.

La pluralité de cloison peut être réalisée par injection d'un matériau thermoplastique ou thermodurcissable chargé ou non, par injection-compression d'un matériau thermoplastique ou thermodurcissable chargé ou non ou par injection avec pilotage de la température de l'outillage d'un matériau thermoplastique ou thermodurcissable chargé ou non. La peau acoustique et la peau de fermeture peuvent être réalisées par injection RTM, par drapage ou par estampage d'un matériau avec des fibres continues.

La structure d'atténuation acoustique ainsi fabriquée peut par exemple être utilisée au sein d'un carter de moteur aéronautique, en particulier au sein d'un carter d'un ensemble propulsif d'avion.

## Revendications

1. Procédé de fabrication d'un panneau acoustique (120) comprenant la fabrication d'au moins un premier composant acoustique (121) et un deuxième composant acoustique (122) en matériau thermoplastique comprenant chacun une pluralité d'éléments acoustiques creux (121b, 122b), le premier composant (121) comprenant un premier bord de jonction (121a) et le deuxième composant (122) comprenant un deuxième bord de jonction (122a), le premier composant (121) et le deuxième composant (122) étant soudés l'un à l'autre par les premier et deuxième bords de jonction (121a, 122a) pour former au moins une partie du panneau acoustique (120),
le procédé étant **caractérisé en ce que**, lors de l'opération de soudage, un outillage (500) recouvre une partie des premier et deuxième composants (121, 122) comprenant les premier et deuxième bords de jonction (121a, 122a) de sorte à épouser la géométrie des éléments acoustiques creux (121b, 122b) recouverts, et **en ce qu'**un gradient thermique est appliqué sur les parties du premier composant (121) et du deuxième composant (122) recouvertes par l'outillage (500) de sorte à appliquer une température (Tⱼ) supérieure à la température de transition vitreuse ou de fusion (Tᵣ) du matériau thermoplastique sur les premier et deuxième bords de jonction (121a, 122a) et de sorte à appliquer une température (Tₑ) inférieure ou égale à la température de stabilisation géométrique (Tₛ) du matériau thermoplastique sur les éléments acoustiques creux (121b, 122b) recouverts par l'outillage (500) les plus éloignés des premier et deuxième bords de jonction (121a, 122a).

2. Procédé de fabrication selon la revendication 1, dans lequel une partie des éléments acoustiques creux (121b, 122b) du premier composant (121) et du deuxième composant (122) est située en dehors de l'outillage (500).

3. Procédé de fabrication selon la revendication 1 ou 2, dans lequel le deuxième bord de jonction (122a) recouvre en partie le premier bord de jonction (121a).

4. Procédé de fabrication selon la revendication 1 ou 2, dans lequel une surépaisseur de matière (123) est présente le long du premier et du deuxième bord de jonction (121a, 122a).

5. Procédé de fabrication selon l'une quelconque des revendications 1 à 4, dans lequel le gradient thermique est réalisé par air pulsé.

6. Procédé de fabrication selon l'une quelconque des revendications 1 à 5, dans lequel le matériau thermoplastique est un polyétherimide.

7. Procédé de fabrication selon la revendication 6, dans lequel la température (Tⱼ) appliquée sur les premier et deuxième bords de jonction (121a, 122a) est supérieure à 420°C et dans lequel la température (Tₑ) appliquée sur les éléments acoustiques creux (121b, 122b) recouverts par l'outillage (500) les plus éloignés des premier et deuxième bords de jonction (121a, 122a) est inférieure à 215°C.

8. Procédé de fabrication d'une structure d'atténuation acoustique (100) comprenant les étapes suivantes :
- la fabrication d'un panneau acoustique (120) selon le procédé tel que défini dans l'une quelconque des revendications 1 à 7,
- la réalisation d'un corps cellulaire comprenant le panneau acoustique (120) et une pluralité de cloisons (131) formant des cavités acoustiques, chaque élément acoustique creux (121b, 122b) du panneau acoustique (120) étant logé dans une cavité acoustique de manière à former une cellule acoustique (150),
- l'assemblage d'une première face du corps cellulaire avec une face d'assemblage d'une peau acoustique (110).

9. Procédé de fabrication selon la revendication 8, comprenant en outre l'assemblage d'une deuxième face du corps cellulaire opposée à la première face recouverte par la peau acoustique (110) avec une face d'assemblage d'une peau de fermeture (140).

10. Carter de moteur aéronautique comprenant au moins une structure d'atténuation acoustique (100) fabriquée selon le procédé tel que défini dans la revendication 8 ou 9.

## Patentansprüche

1. Verfahren zur Herstellung eines Akustik-Paneels (120), umfassend die Herstellung mindestens einer ersten akustischen Komponente (121) und einer zweiten akustischen Komponente (122) aus thermoplastischem Material, die jeweils eine Vielzahl von hohlen akustischen Elementen (121b, 122b) umfassen, wobei die erste Komponente (121) einen ersten Verbindungsrand (121a) umfasst und die zweite Komponente (122) einen zweiten Verbindungsrand (122a) umfasst, wobei die erste Komponente (121) und die zweite Komponente (122) durch die ersten und zweiten Verbindungsränder (121a, 122a) miteinander verschweißt werden, um zumindest einen Teil des Akustik-Paneels (120) zu bilden,
wobei das Verfahren **dadurch gekennzeichnet ist, dass** während des Schweißvorgangs ein Werkzeug (500) einen Teil der ersten und zweiten Komponenten (121, 122), der die ersten und zweiten Verbindungsränder (121a, 122a) umfasst, auf solche Weise bedeckt, dass es eng an die Geometrie der davon bedeckten hohlen akustischen Elemente (121b, 122b) angepasst ist, und dass ein thermischer Gradient auf die Teile der ersten Komponente (121) und der zweiten Komponente (122), die von dem Werkzeug (500) bedeckt sind, auf solche Weise angewendet wird, dass eine Temperatur (Tⱼ), die höher als die Glasübergangs- oder Fusionstemperatur (T_{f}) des thermoplastischen Materials ist, auf die ersten und zweiten Verbindungsränder (121a, 122a) angewendet wird, und auf solche Weise, dass eine Temperatur (Tₑ), die niedriger oder gleich der Temperatur der geometrischen Stabilisierung (Tₛ) des thermoplastischen Materials ist, auf die von dem Werkzeug (500) bedeckten hohlen akustischen Elemente (121b, 122b), die am weitesten von den ersten und zweiten Verbindungsrändern (121a, 122a) entfernt sind, angewendet wird.

2. Verfahren zur Herstellung nach Anspruch 1, wobei ein Teil der hohlen akustischen Elemente (121b, 122b) der ersten Komponente (121) und der zweiten Komponente (122) sich außerhalb des Werkzeugs (500) befindet.

3. Verfahren zur Herstellung nach Anspruch 1 oder 2, wobei der zweite Verbindungsrand (122a) zum Teil den ersten Verbindungsrand (121a) bedeckt.

4. Verfahren zur Herstellung nach Anspruch 1 oder 2, wobei entlang des ersten und des zweiten Verbindungsrandes (121a, 122a) eine Überdicke an Material (123) vorhanden ist.

5. Verfahren zur Herstellung nach einem der Ansprüche 1 bis 4, wobei der thermische Gradient mittels Umluft verwirklicht wird.

6. Verfahren zur Herstellung nach einem der Ansprüche 1 bis 5, wobei das thermoplastische Material ein Polyetherimid ist.

7. Verfahren zur Herstellung nach Anspruch 6, wobei die Temperatur (Tⱼ), die auf die ersten und zweiten Verbindungsränder (121a, 122a) angewendet wird, höher als 420 °C ist, und wobei die Temperatur (Tₑ), die auf die von dem Werkzeug (500) bedeckten hohlen akustischen Elemente (121b, 122b) angewendet wird, die am weitesten von den ersten und zweiten Verbindungsrändern (121a, 122a) entfernt sind, niedriger als 215 °C ist.

8. Verfahren zur Herstellung einer Schalldämpfungsstruktur (100), das die folgenden Schritte umfasst:
- die Herstellung eines Akustik-Paneels (120) nach dem Verfahren, wie es in einem der Ansprüche 1 bis 7 definiert wird,
- die Verwirklichung eines zelligen Körpers umfassend das Akustik-Paneel (120) und eine Vielzahl von Trennwänden (131), welche akustische Hohlräume bilden, wobei jedes hohle akustische Element (121b, 122b) des Akustik-Paneels (120) auf solche Weise in einem akustischen Hohlraum untergebracht ist, dass eine akustische Zelle (150) gebildet wird,
- die Montage einer ersten Seite des zelligen Körpers an einer Montageseite einer akustischen Haut (110).

9. Verfahren zur Herstellung nach Anspruch 8, umfassend ferner die Montage einer zweiten Seite des zelligen Körpers, welche der ersten Seite, die von der akustischen Haut (110) bedeckt ist, gegenüberliegt, an einer Montageseite einer Abschlusshaut (140).

10. Gehäuse für einen Luftfahrzeugmotor, umfassend zumindest eine Schalldämpfungsstruktur (100), die nach dem Verfahren, wie es in Anspruch 8 oder 9 definiert ist, hergestellt ist.

## Claims

1. A method for manufacturing an acoustic panel (120) comprising the manufacture of at least a first acoustic component (121) and a second acoustic component (122) made of thermoplastic material each comprising a plurality of hollow acoustic elements (121b, 122b), the first component (121) comprising a first joining edge (121a) and the second component (122) comprising a second joining edge (122a), the first component (121) and the second component (122) being welded to each other by the first and second joining edges (121a, 122a) to form at least part of the acoustic panel (120),
the method being **characterized in that**, during the welding operation, a tooling (500) covers part of the first and second components (121, 122) comprising the first and second joining edges (121a, 122a) so as to match the geometry of the covered hollow acoustic elements,
and **in that** a thermal gradient is applied on the parts of the first component (121) and of the second component (122) covered by the tooling (500) so as to apply a temperature (Tⱼ) higher than the glass transition or melting temperature (T_{f}) of the thermoplastic material on the first and second joining edges (121a, 122a) and so as to apply a temperature (Tₑ) lower than or equal to the geometric stabilization temperature (Tₛ) of the thermoplastic material on the hollow acoustic elements (121b, 122b) covered by the tooling (500) that are furthest from the first and second joining edges (121a, 122a).

2. The manufacturing method according to claim 1, wherein part of the hollow acoustic elements (121b, 122b) of the first component (121) and of the second component (122) is located outside the tooling (500).

3. The manufacturing method according to claim 1 or 2, wherein the second joining edge (122a) partly covers the first joining edge (121a).

4. The manufacturing method according to claim 1 or 2, wherein an extra thickness of material (123) is present along the first and the second joining edge (121a, 122a).

5. The manufacturing method according to any one of claims 1 to 4,
wherein the thermal gradient is made by pulsed air.

6. The manufacturing method according to any one of claims 1 to 5,
wherein the thermoplastic material is a polyetherimide.

7. The manufacturing method according to claim 6, wherein the temperature (Tⱼ) applied on the first and second joining edges (121a, 122a) is greater than 420°C and wherein the temperature (Tₑ) applied on the hollow acoustic elements (121b, 122b) covered by the tooling (500) that are furthest from the first and second joining edges (121a, 122a) is less than 215°C.

8. A method for manufacturing an acoustic attenuation structure (100) comprising the following steps:
- manufacturing an acoustic panel (120) according to the method as defined in any one of claims 1 to 7,
- making a cellular body comprising the acoustic panel (120) and a plurality of partitions (131) forming acoustic cavities, each hollow acoustic element (121b, 122b) of the acoustic panel (120) being housed in an acoustic cavity of so as to form an acoustic cell (150),
- assembling a first face of the cellular body with an assembly face of an acoustic skin (110).

9. The manufacturing method according to claim 8, further comprising the assembly of a second face of the cellular body opposite to the first face covered by the acoustic skin (110) with an assembly face of a closing skin (140).

10. An aeronautical engine casing comprising at least one acoustic attenuation structure (100) manufactured according to the method as defined in claim 8 or 9.
